(19) Europäisches Patentamt
European Patent Office
Office européen des brevets

(11) **EP 4 389 266 A1**

(12) **EUROPEAN PATENT APPLICATION**

(43) Date of publication:
26.06.2024 Bulletin 2024/26

(21) Application number: 23212153.3

(22) Date of filing: 25.11.2023

(51) International Patent Classification (IPC):
**B01D 67/00** (2006.01)

(52) Cooperative Patent Classification (CPC):
**B01D 67/0095;** B01D 2323/2181;
B01D 2323/21827; B01D 2323/21828

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022 JP 2022201738**

(71) Applicant: **Nitto Denko Corporation**
**Ibaraki-shi, Osaka 567-8680 (JP)**

(72) Inventor: **OKAZAKI, Yuha**
**IBARAKI-SHI, OSAKA, 567-8680 (JP)**

(74) Representative: **Cabinet Beau de Loménie**
**158, rue de l'Université**
**75340 Paris Cedex 07 (FR)**

(54) **METHOD FOR PRESERVING COMPOSITE SEMIPERMEABLE MEMBRANE, PRESERVATION SOLUTION, AND SPIRAL MEMBRANE ELEMENT**

(57) Provided are a method for preserving a composite semipermeable membrane which is less likely to cause a decrease in the water permeability of the composite semipermeable membrane even in a high-temperature environment, a preservation solution used for the method, and a spiral membrane element including the preservation solution. A method for preserving a composite semipermeable membrane that allows monovalent ions to selectively permeate therethrough, the method includes using an aqueous solution containing an inorganic salt and/or an organic salt composed only of monovalent cations and monovalent anions as a preservation solution to be brought into contact with the composite semipermeable membrane.

Fig. 1

**Description**

BACKGROUND OF THE INVENTION

Field of the Invention

The present invention relates to a method for preserving a composite semipermeable membrane using a preservation solution, the preservation solution, and a spiral membrane element (hereinafter, may be abbreviated as a "membrane element") including the preservation solution.

Description of the Related Art

A composite semipermeable membrane is called an RO (reverse osmosis) membrane, an NF (nano-filtration) membrane, or an FO (forward osmosis) membrane depending on the filtration properties or treatment methods, and is usable for production of ultrapure water, seawater desalination, desalinization of brackish water, and reuse of wastewater, and the like. In particular, a composite semipermeable membrane that allows monovalent ions to selectively permeate therethrough is used as an NF membrane for separating and removing divalent ion salts such as magnesium sulfate.
When a typical composite semipermeable membrane is dried after passing water, the water permeability of the composite semipermeable membrane may be significantly deteriorated or the blocking performance thereof may be changed as compared with that before drying. For this reason, the transport and storage and the like of a spiral membrane element have been performed in a state where pure water, or an aqueous solution containing propylene glycol, or the like is sealed in the membrane element as a preservation solution.
However, in particular, in the case of a composite semipermeable membrane including a separation functional layer formed of a polyamide-based resin or the like containing a component derived from piperazine, the water permeability of the composite semipermeable membrane tends to be apt to decrease during transportation or storage under a high-temperature environment (for example, 40°C or higher). For this reason, the membrane element is transported and stored in a refrigerated (reefer) container, and therefore there are problems such as an increase in cost of transportation and storage and an increase in an environmental load.
Meanwhile, as such a preservation solution, Patent Document 1 proposes a preservation solution composed of an aqueous solution containing an inorganic salt as a main component to be used for a microfiltration (MF) membrane or an ultrafiltration (UF) membrane. The inorganic salt preferably exhibits anti-freezing, and anti-microbial and anti-fungal performance in addition to prevention of membrane drying are considered to be preferable.

Prior Art Document

Patent Document

Patent Document 1: JP-A-2020-142191

SUMMARY OF THE INVENTION

However, in Patent Document 1, it is unclear whether or not the aqueous solution proposed as the preservation solution to be used for the microfiltration (MF) membrane or the ultrafiltration (UF) membrane can obtain an effect of suppressing a decrease in water permeability, when composite semipermeable membranes having significantly different pore sizes are transported and stored under a high-temperature environment, because the pore sizes are significantly different.
Therefore, an object of the present invention is to provide a method for preserving a composite semipermeable membrane which is less likely to cause a decrease in the water permeability of the composite semipermeable membrane even in a high-temperature environment, and a preservation solution used for the method.
Another object of the present invention is to provide a spiral membrane element which is less likely to cause a decrease in the water permeability of the composite semipermeable membrane even when the composite semipermeable membrane is transported or stored in a high-temperature environment.
As a result of intensive studies to solve the above problems, the present inventors have found that the relationship between the ion size of a component contained in a preservation solution and the size of permeated ions in a separation functional layer of a composite semipermeable membrane is important in maintaining water permeability in a high-temperature environment, and the above object can be achieved by selecting the appropriate ion size of the component contained in a preservation solution, thereby completing the present invention.
That is, the present invention includes the following contents.

[1] A method for preserving a composite semipermeable membrane that allows monovalent ions to selectively permeate therethrough, the method including using an aqueous solution containing an inorganic salt and/or an organic salt composed only of monovalent cations and monovalent anions as a preservation solution to be brought into contact with the composite semipermeable membrane.

According to the preservation method, the water permeability of the composite semipermeable membrane is less likely to decrease even in a high-temperature environment. Details of the reason are unknown, but it is considered as follows. That is, it is considered that the composite semipermeable membrane that allows monovalent ions to selectively permeate therethrough is likely to diffuse the monovalent cations and the monovalent anions into a separation functional layer when the preservation solution is in contact with the composite semipermeable membrane, but even when the composite semipermeable membrane is placed in a high-temperature environment (for example, 40°C or higher) in this state, the shrinkage or microstructural change of the separation functional layer is less likely to occur, and deterioration in the water permeability is less likely to occur. Meanwhile, it is considered that when a salt containing divalent ions is used, the divalent ions are localized on the surface of the separation functional layer, and an effect of discharging moisture in the separation functional layer by forward osmosis is enhanced, to promote a decrease in the water permeability.

[2] The method for preserving a composite semipermeable membrane according to [1], wherein the composite semipermeable membrane includes a porous support and a separation functional layer formed of a polyamide-based resin on the porous support, and the polyamide-based resin contains a component derived from piperazine.

In the case of the separation functional layer formed of a polyamide-based resin containing a component derived from piperazine, in particular, an effect of the present invention tends to be remarkable caused by the relationship between the preservation stability of the composite semipermeable membrane in a high-temperature environment and the size of the permeated ions in the separation functional layer.

[3] The method for preserving a composite semipermeable membrane according to [1] or [2], wherein the monovalent cations are one or more cations selected from the group consisting of $NH_4^+$, $Na^+$, and $K^+$, the monovalent anions are one or more anions selected from the group consisting of $Cl^-$, $HCOO^-$, $CH_3COO^-$, $HCO_3^-$, and $NO_3^-$, and a molecular weight of the inorganic salt and/or the organic salt is 101 or less.

In particular, when the inorganic salt and/or the organic salt is a salt containing $HCOO^-$ or $CH_3COO^-$ ions as described above, the effect of the present invention is likely to be obtained while the corrosiveness of a water production facility is suppressed.

[4] The method for preserving a composite semipermeable membrane according to any one of [1] to [3], wherein a concentration of the inorganic salt and/or the organic salt is 0.5% by mass or more in the preservation solution.

With such a concentration, the water permeability of the composite semipermeable membrane is less likely to decrease more reliably.

[5] The method for preserving a composite semipermeable membrane according to any one of [1] to [4], wherein the preservation solution further contains a chemical having a bacteriostatic effect or a bactericidal effect.

The use of the preservation solution further containing the above-mentioned chemical makes it possible to suppress the growth of bacteria during preservation.

[6] The preservation solution for use in the method for preserving a composite semipermeable membrane according to any one of [1] to [5].

By using such a preservation solution, the water permeability of the composite semipermeable membrane is less likely to decrease even when the composite semipermeable membrane is transported and stored under a high-temperature environment.

[7] A spiral membrane element including a composite semipermeable membrane and a preservation solution in contact with the composite semipermeable membrane, wherein the composite semipermeable membrane is a composite semipermeable membrane that allows monovalent ions to selectively permeate therethrough, and the preservation solution is an aqueous solution containing an inorganic salt and/or an organic salt composed only of monovalent cations and monovalent anions.

According to the spiral membrane element, the preservation solution is used, and therefore the water permeability of the composite semipermeable membrane is less likely to decrease even in a high-temperature environment. The reason is as described for [1]. Also for the following [8] to [11], the effects thereof are as described for [2] to [5].

[8] The spiral membrane element according to [7], wherein the composite semipermeable membrane includes a porous support and a separation functional layer formed of a polyamide-based resin on the porous support, and the polyamide-based resin contains a component derived from piperazine.

[9] The spiral membrane element according to [7] or [8], wherein the monovalent cations are one or more cations selected from the group consisting of $NH_4^+$, $Na^+$, and $K^+$, the monovalent anions are one or more anions selected from the group consisting of $Cl^-$, $HCOO^-$, $CH_3COO^-$, $HCO_3^-$, and $NO_3^-$, and a molecular weight of the inorganic salt and/or the organic salt is 101 or less.

[10] The spiral membrane element according to any one of [7] to [9], wherein a concentration of the inorganic salt and/or the organic salt is 0.5% by mass or more in the preservation solution.

[11] The spiral membrane element according to any one of [7] to [10], wherein the preservation solution further contains a chemical having a bacteriostatic effect or a bactericidal effect.

According to the present invention, it is possible to provide a method for preserving a composite semipermeable membrane and a preservation solution used for the method, which is less likely to cause a decrease in the water permeability of the composite semipermeable membrane even in a high-temperature environment. It is possible to provide a spiral membrane element in which the water permeability of the composite semipermeable membrane is less likely to decrease even when the composite semipermeable membrane is transported or stored or the like is performed in a high-temperature environment.

BRIEF DESCRIPTION OF THE DRAWING

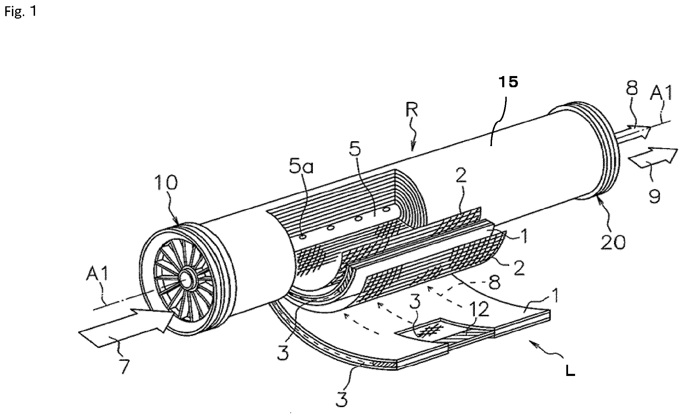

Fig. 1 is a partially cutaway perspective view showing an example of a spiral membrane element.

DETAILED DESCRIPTION OF THE PREFERRED EMBODIMENTS

Hereinafter, embodiments of the present invention will be described.

(Method for preserving composite semipermeable membrane)

A method for preserving a composite semipermeable membrane of the present invention is used for preserving a composite semipermeable membrane that allows monovalent ions to selectively permeate therethrough. Here, "allow monovalent ions to selectively permeate" refers to "allow monovalent ions to more selectively permeate than divalent ions", and can be specifically determined as follows.

That is, it is determined whether the rejections of monovalent ions ($Na^+$, $K^+$, and $Cl^-$) contained in model sea water shown in Table 1 are 50% or less and the rejections of divalent ions ($Mg^{2+}$ and $SO_4^{2-}$) are more than 50% according to the evaluation method of "(1) Rejections of various ions using model sea water" in Examples. If these conditions are fulfilled, it corresponds to a composite semipermeable membrane that allows monovalent ions to selectively permeate therethrough.

It is preferable that such a composite semipermeable membrane includes a porous support and a separation functional layer formed of a polyamide-based resin on the porous support, and the polyamide-based resin contains a component derived from piperazine. The composite semipermeable membrane will be described in detail later.

In the method for preserving a composite semipermeable membrane of the present invention, the composite semipermeable membrane is brought into contact with a specific preservation solution, and examples of a method for bringing the composite semipermeable membrane into contact with the preservation solution include a contact method in the state of a spiral membrane element and a contact method in the state of the composite semipermeable membrane. However, from the viewpoint that the contact state can be favorably maintained by a simple step, a method for bringing the preservation solution into contact in the state of the membrane element is preferable.

Examples of the method for bringing the preservation solution into contact in the state of the membrane element include a method for immersing the membrane element in the preservation solution, a method for supplying the preservation solution to the supply-side flow-channel of the membrane element, and a method for allowing a part of the preservation solution to permeate at that time. After the preservation solution is brought into contact with the membrane element, a part of the preservation solution may be removed from the membrane element, or the preservation solution may be sealed inside the membrane element in a state where the preservation solution is present in a part or the whole of the flow-channel. In that case, the membrane element may be packaged by vacuum suction.

Examples of the method for bringing the preservation solution into contact in the state of the composite semipermeable membrane include a method in which the composite semipermeable membrane is formed, continuously immersed in the preservation solution, and then wound up, a method in which the composite semipermeable membrane formed into a roll is unwound and continuously immersed in the preservation solution, and a method in which the preservation solution is sprayed or flowed down to the composite semipermeable membrane in or after a production step.

A contact state between the composite semipermeable membrane and the preservation solution is preferably maintained until membrane separation is performed. From such a viewpoint, a method for packaging or sealing the membrane element in a state where the composite semipermeable membrane and the preservation solution are in contact with each other is preferable, and in particular, a method for packaging or sealing the membrane element in a vacuum suction state is preferable.

The preservation of the composite semipermeable membrane is a concept including maintaining the state of the composite semipermeable membrane in the transportation, storage, movement, and operation standby and the like of the composite semipermeable membrane or the membrane element including the composite semipermeable membrane. In the present invention, the composite semipermeable membrane and the membrane element can be preserved in a high-temperature environment, but the composite semipermeable membrane and the membrane element can be preserved at, for example, 40°C or higher, and particularly 45 to 55°C.

As the preservation solution to be brought into contact with the composite semipermeable membrane, a preservation solution to be described later can be used. That is, the preservation solution of the present invention is used in the method for preserving the composite semipermeable membrane of the present invention.

(Preservation solution)

In the present invention, it is preferable to use an aqueous solution containing an inorganic salt and/or an organic salt composed only of monovalent cations and monovalent anions as the preservation solution to be brought into contact with the composite semipermeable membrane.

Examples of the monovalent cations constituting the inorganic salt and/or the organic salt include monovalent metal ions such as alkali metal ions and ammonium ions. One or more cations selected from the group consisting of $NH_4^+$, $Li^+$, $Na^+$, and $K^+$ are preferable, and $Na^+$ and $K^+$ are more preferable from the viewpoint of an environmental load.

Examples of the monovalent anions constituting the inorganic salt and/or the organic salt include monovalent inorganic ions such as halogen ions, hydrogen carbonate ions, nitrate ions, and hydrogen sulfite ions, and monovalent organic acid ions such as organic carboxylic acid ions. One or more anions selected from the group consisting of $Cl^-$, $HCOO^-$, $CH_3COO^-$, $HCO_3^-$, and $NO_3^-$ are preferable, and $CH_3COO^-$ and $HCOO^-$ are more preferable from the viewpoint of low corrosive properties.

As the inorganic salt and/or the organic salt, in particular, $NaCl$, $NH_4Cl$, $NaNO_3$, $HCOONa$, and $CH_3COONa$ are preferable from the viewpoint of maintaining the water permeability while maintaining the rejection of $MgSO_4$.

The molecular weight of the inorganic salt and/or the organic salt is preferably 101 or less, more preferably 98 or less, and still more preferably 84 or less, from the viewpoint of maintaining the water permeability of the composite semipermeable membrane under a high-temperature environment. The lower limit value of the molecular weight of the inorganic salt and/or the organic salt is preferably 20 or more, and more preferably 40 or more.

The molecular weight (g/ion molar number) of the monovalent cations constituting the inorganic salt and/or the organic salt is preferably 40 or less, and more preferably 25 or less, from the viewpoint of maintaining the water permeability of the composite semipermeable membrane under a high-temperature environment. The molecular weight (g/ion molar number) of the monovalent anions constituting the inorganic salt and/or the organic salt is preferably 65 or less, and more preferably 45 or less, from the viewpoint of maintaining the water permeability of the composite semipermeable membrane under a high-temperature environment.

The preservation solution contains water, but may contain a solvent other than water, and examples of the solvent include alcohols such as ethylene glycol, glycerin, and propylene glycol.

The concentration of the inorganic salt and/or the organic salt is preferably 0.5% by mass or more, and more preferably 1% by mass or more in the preservation solution from the viewpoint of maintaining the water permeability of the composite semipermeable membrane under a high-temperature environment. The concentration of the inorganic salt and/or the organic salt is preferably 5% by mass or less, more preferably 4% by mass or less, and particularly preferably 2% by mass or less in the preservation solution, from the viewpoint of cost.

Furthermore, the preservation solution preferably contains a chemical having a bacteriostatic effect or a bactericidal effect. Examples of such a chemical include SBS (sodium bisulfite), formaldehyde, a hypochlorous acid-based compound or hydrogen peroxide, and benzoic acid.

The content of the chemical is preferably 0.1 to 2.0% by mass, and more preferably 0.5 to 1.0% by mass in the preservation solution, from the viewpoint of a bacteriostatic effect or a bactericidal effect.

(Composite semipermeable membrane)

As the composite semipermeable membrane, a composite semipermeable membrane that allows monovalent ions to selectively permeate therethrough is used. It is preferable that the composite semipermeable membrane includes a porous support and a separation functional layer formed of a polyamide-based resin on the porous support, and the polyamide-based resin contains a component derived from piperazine. More preferably, the polyamide-based resin contains a component derived from piperazine and a component derived from trimesic acid trichloride.

The separation functional layer is composed of, for example, a polyamide formed by the reaction of a compound group containing an aliphatic polyfunctional amine (B), or an aromatic polyfunctional amine (A) and an aliphatic polyfunctional amine (B), and a polyfunctional acid halide. Here, in the compound group, the proportion of the aromatic polyfunctional amine (A) in the polyfunctional amine is preferably less than 5 mol%, more preferably less than 1 mol%, and particularly preferably 0 mol%.

This polyamide has a constituent unit formed by reacting the polyfunctional amines (A) and (B) with the polyfunctional acid halide, more specifically, by the polymerization (polycondensation) thereof. Among them, a constituent unit (C) formed by the reaction of the aliphatic polyfunctional amine (B) and the polyfunctional acid halide tends to be more flexible, and a constituent unit (D) formed by the reaction of the aromatic polyfunctional amine (A) and the polyfunctional acid halide tends to be more rigid.

The proportion of the aliphatic polyfunctional amine (B) to the polyfunctional amine in the compound group is preferably 95 mol% or more, more preferably 99 mol% or more, and particularly preferably 100 mol%, from the viewpoint of being likely to obtain a composite semipermeable membrane that allows monovalent ions to selectively permeate therethrough.

The polyfunctional amine is an amine having two or more reactive amino groups, and is, for example, a diamine having two reactive amino groups. The compound group may contain two or more kinds of aromatic polyfunctional amines (A) or two or more kinds of aliphatic polyfunctional amines (B) .

The aromatic polyfunctional amine (A) is not particularly limited, and is, for example, at least one selected from m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine. The aromatic polyfunctional amine (A) is preferably at least one selected from m-phenylenediamine, p-phenylenediamine, and o-phenylenediamine, and more preferably m-phenylenediamine. When the compound group contains two or more kinds of aromatic polyfunctional amines (A), the compound group preferably contains m-phenylenediamine as the polyfunctional amine (A).

The aliphatic polyfunctional amine (B) is, for example, an alicyclic polyfunctional amine. In this case, the permeation flux of the composite semipermeable membrane can be improved at a higher level by the combination of the aliphatic polyfunctional amine (B) with the aromatic polyfunctional amine (A).

The alicyclic polyfunctional amine (B) is not particularly limited, and is, for example, at least one selected from 1,3-diaminocyclohexane, 1,2-diaminocyclohexane, 1,4-diaminocyclohexane, and piperazine and derivatives thereof. The alicyclic polyfunctional amine (B) is preferably piperazine or a piperazine derivative. Here, the piperazine derivative refers to a compound in which at least one of hydrogen atoms bonded to carbon atoms or nitrogen atoms of piperazine is substituted with a substituent. Examples of the substituent include an alkyl group having 1 to 4 carbon atoms, an amino group, and a hydroxyl group. Because of the polyfunctional amine, the substituent is an amino group when the hydrogen atom bonded to the nitrogen atom is substituted. The piperazine derivative is, for example, at least one selected from 2,5-dimethylpiperazine and 4-aminomethylpiperazine.

The polyfunctional acid halide is an acid halide having two or more reactive carbonyl groups. The polyfunctional acid halide may be an aromatic polyfunctional acid halide or an aliphatic polyfunctional acid halide. The aliphatic polyfunctional acid halide may be an alicyclic polyfunctional acid halide. The compound group may contain two or more kinds of polyfunctional acid halides. When the compound group contains a polyfunctional acid halide having a valence of trivalent or more, a separation functional layer composed of a polyamide having a crosslinked structure can be formed.

The aromatic polyfunctional acid halide is not particularly limited, and is, for example, at least one selected from trimesic acid trichloride, terephthalic acid dichloride, isophthalic acid dichloride, biphenyl dicarboxylic acid dichloride, naphthalene dicarboxylic acid dichloride, benzene trisulfonic acid trichloride, benzene disulfonic acid dichloride, and chlorosulfonylbenzene dicarboxylic acid dichloride.

The aliphatic polyfunctional acid halide is not particularly limited, and is, for example, at least one selected from propane dicarboxylic acid dichloride, butane dicarboxylic acid dichloride, pentane dicarboxylic acid dichloride, propane tricarboxylic acid trichloride, butane tricarboxylic acid trichloride, pentane tricarboxylic acid trichloride, glutaryl halide, adipoyl halide, and alicyclic polyfunctional acid halides to be described later.

The alicyclic polyfunctional acid halide is not particularly limited, and is, for example, at least one selected from cyclopropane tricarboxylic acid trichloride, cyclobutane tetracarboxylic acid tetrachloride, cyclopentane tricarboxylic acid trichloride, cyclopentane tetracarboxylic acid tetrachloride, cyclohexane tricarboxylic acid trichloride, tetrahydrofuran tetracarboxylic acid tetrachloride, cyclopentane dicarboxylic acid dichloride, cyclobutane dicarboxylic acid dichloride, cyclohexane dicarboxylic acid dichloride, and tetrahydrofuran dicarboxylic acid dichloride.

The configuration of the porous support is not limited as long as the separation functional layer can be formed thereon. The porous support is, for example, an ultrafiltration membrane in which a microporous layer is formed on a nonwoven fabric. The average pore diameter of the microporous layer is, for example, about 0.01 to 0.4 um. The material of the microporous layer is, for example, polyarylethersulfone such as polysulfone or polyethersulfone; polyimide; and polyvinylidene fluoride. Among them, polysulfone and polyarylethersulfone are preferable because of their high chemical, mechanical, and thermal stabilities. The porous support may be a self-standing support composed of a thermosetting resin such as an epoxy resin. In this case, the porous support has an average pore size of, for example, 0.01 to 0.4 um. The thickness of the porous support is not particularly limited, and is, for example, 10 to 200 $\mu$m, and preferably 20 to 75 $\mu$m.

A method for forming the separation functional layer on the porous support is not particularly limited, and a known method can be adopted. Examples of the method for forming the separation functional layer include an interfacial condensation method, a phase separation method, and a thin membrane coating method. The interfacial condensation method is a method in which an aqueous amine solution containing a polyfunctional amine is brought into contact with an organic acid halide solution containing a polyfunctional acid halide to allow a reaction (polycondensation) between the polyfunctional amine and the polyfunctional acid halide to proceed at the contact surface (interface), thereby forming a separation functional layer composed of polyamide. The formation of the separation functional layer by the interfacial condensation can be performed on the porous support. In this case, the separation functional layer is directly formed on the porous support. Of course, the separation functional layer formed at a place other than a place on the porous support, for example, on a transfer substrate may be placed on the porous support. The interfacial condensation method is described in detail in, for example, JP-A-58-24303 and JP-A-1-180208 and the like, and conditions and the like described in the known documents can be appropriately adopted. Also in the phase separation method and the thin membrane coating method, methods described in the known documents can be adopted.

The separation functional layer is preferably formed by applying an aqueous amine solution containing a polyfunctional amine component onto a porous support to form an aqueous solution coating layer, then applying an organic acid halide solution containing a polyfunctional acid halide onto the porous support to bring the organic acid halide solution into contact with the coating layer, and allowing interfacial polymerization to proceed.

In this method, the concentration of the polyfunctional amine in the aqueous amine solution is not particularly limited, and is, for example, 0.1 to 10% by mass, and preferably 1 to 4% by mass. In this method, the concentration of the polyfunctional acid halide in the organic acid halide solution is not particularly limited, and is, for example, 0.01 to 5% by mass, and preferably 0.05 to 3% by mass.

The organic solvent used in the organic acid halide solution is not particularly limited as long as the organic solvent has low solubility in water, does not deteriorate the porous support, and dissolves the polyfunctional acid halide, and examples thereof include saturated hydrocarbons such as cyclohexane, heptane, octane, and nonane; and halogen-substituted hydrocarbons such as 1,1,2-trichlorotrifluoroethane. The organic solvent is preferably a saturated hydrocarbon having a boiling point of 300°C or lower, and more preferably a saturated hydrocarbon having a boiling point of 200°C or lower.

A time from the application of the aqueous amine solution on the porous support to the application of the organic acid halide solution is about 1 to 180 seconds, preferably 2 to 120 seconds, more preferably 2 to 40 seconds, and particularly preferably 2 to 10 seconds although the time depends on the composition and viscosity of the aqueous amine solution and the pore size of the surface of the porous support. When the interval between both the applications is excessively long, the aqueous amine solution penetrates deep into the porous support and diffuses until the organic acid halide solution is applied, and therefore a large amount of unreacted polyfunctional amine may remain in the porous support. The unreacted polyfunctional amine that has penetrated deep into the porous support tends to be difficult to remove even by the subsequent washing treatment. Meanwhile, when the interval between both the applications is excessively shortened, the aqueous amine solution hardly permeates through the porous support until the application of the organic acid halide solution. An excessive aqueous amine solution is present on the porous support, and therefore the characteristics of the formed separation functional layer may be deteriorated.

In this method, it is preferable to form the separation functional layer by bringing the coating layer of the aqueous amine solution formed on the porous support into contact with the organic acid halide solution, then removing the excessive organic solution present on the porous support, and drying the membrane formed on the porous support by heating. By drying by heating, the mechanical strength and heat resistance of the separation functional layer can be enhanced. A temperature for drying by heating is, for example, 70 to 200°C, and preferably 80 to 130°C. A heating time is, for example, about 30 seconds to 10 minutes, and preferably about 40 seconds to 7 minutes.

In addition to the polyfunctional amines (A) and (B) and the polyfunctional acid halide, the compound group can contain various additives for the purpose of facilitating the formation of the separation functional layer and improving the characteristics of the composite semipermeable membrane to be obtained. The additive may be contained in, for example, the aqueous amine solution and/or the organic acid halide solution in the interfacial condensation method. Depending on the kind of the additive, the additive remains in the formed separation functional layer, and contributes to, for example, improvement in the characteristics of the composite semipermeable membrane.

The additive is, for example, a hydrophilic polymer. That is, the compound group may further contain a hydrophilic polymer. The hydrophilic polymer is, for example, at least one selected from polyvinyl alcohol, polyvinyl pyrrolidone, and polyacrylic acid, and polyvinyl alcohol is preferable. When the separation functional layer is formed by the interfacial condensation method, an aqueous polyfunctional amine solution may contain a hydrophilic polymer such as polyvinyl alcohol. The hydrophilic polymer is copolymerized with a polyfunctional amine and a polyfunctional acid halide to improve the hydrophilicity of the surface and inside of the formed separation functional layer. Thereby, the permeation flux of the composite semipermeable membrane can be further improved. The addition amount of the additive is preferably about 0.01 to 20% by mass, and more preferably 0.05 to 5% by mass.

Another examples of the additive include surfactants such as sodium dodecylbenzene sulfonate, sodium dodecyl sulfate, and sodium lauryl sulfate that improve the wettability of the solution to the porous support; basic compounds such as sodium hydroxide, trisodium phosphate, and triethylamine that remove hydrogen halide generated by the reaction of a polyfunctional amine and a polyfunctional acid halide; an acylation catalyst serving as a catalyst for the reaction; and compounds each having a solubility parameter of 8 to 14 $(cal/cm^3)^{1/2}$ as described in JP-A-8-224452. These compounds may be added to the aqueous amine solution if necessary.

For example, the additive is a salt of tetraalkylammonium halide or trialkylammonium and an organic acid. This salt has effects such as facilitating the formation of the separation functional layer, improving the absorbability of the aqueous amine solution to the porous support, and promoting the reaction of the polyfunctional amine and the polyfunctional acid halide. This salt may be added to the aqueous amine solution if necessary.

The thickness of the separation functional layer is not particularly limited, and is usually about 0.05 to 2 $\mu$m, and preferably 0.1 to 1 um. The thickness of the separation functional layer is preferably uniform.

The shape of the separation functional layer is not particularly limited. The separation functional layer may be one layer formed on the porous support, or may be a separation functional layer having a "double fold structure" described in JP-A-2011-189340.

The separation functional layer is a layer composed of polyamide. As long as the effect of the present invention can be obtained, the separation functional layer may contain a material other than polyamide. At this time, the separation functional layer is a layer containing polyamide as a main component. The main component is a component having the highest content rate, and the content rate is usually 50% by mass or more, and more preferably 60% by mass or more, 70% by mass or more, 80% by mass or more, and 90% by mass or more in this order. The separation functional layer may be a layer made of polyamide.

The composite semipermeable membrane of the present invention may be a membrane further subjected to a chlorine treatment. The chlorine treatment may further improve the permeation flux of the composite semipermeable membrane, for example, by removing a portion of the polyamide where bonding is unstable.

A coating layer may be provided on the surface of the composite semipermeable membrane of the present invention. The coating layer is, for example, a nonionic hydrophilic layer, and is a layer composed of a polymer. When the coating layer as the hydrophilic layer is provided, the hydrophilicity of the surface of the composite semipermeable membrane is improved, and therefore the permeation flux of the composite semipermeable membrane is further improved. The coating layer is preferably provided on the surface of the composite semipermeable membrane on the separation functional layer side.

The polymer used for the coating layer is not particularly limited as long as the polymer does not dissolve the separation functional layer and the porous support and does not elute when the composite semipermeable membrane is used (for example, during a water treatment). The polymer is, for example, at least one selected from polyvinyl alcohol, polyvinyl pyrrolidone, hydroxypropyl cellulose, polyethylene glycol, and a saponified product of an ethylene-vinyl acetate copolymer. The polymer is preferably polyvinyl alcohol, and particularly preferably polyvinyl alcohol having a degree of saponification of 99% or more. The coating layer can be formed on the surface of the composite semipermeable membrane by, for example, immersing the composite semipermeable membrane in a solution in which the polymer is dissolved and drying the composite semipermeable membrane.

The coating layer may have a crosslinked structure with the polyamide constituting the separation functional layer. In this case, the elution of the coating layer during the use of the composite semipermeable membrane can be suppressed. The coating layer having the crosslinked structure with the polyamide is, for example, a layer containing polyvinyl alcohol having a degree of saponification of 90% or more. A method for crosslinking polyvinyl alcohol and polyamide is not particularly limited, and for example, a composite semipermeable membrane including a polyvinyl alcohol layer formed on the surface of the separation functional layer may be immersed in a hydrochloric acid-acidic polyvalent aldehyde solution. The polyvalent aldehyde is, for example, a dialdehyde such as glutaraldehyde or terephthalaldehyde. Instead of or in conjunction with the polyvalent aldehyde, organic crosslinkers such as epoxy compounds and polycarboxylic acids and/or inorganic crosslinkers such as boron compounds may be used as crosslinkers.

(Spiral membrane element)

The spiral membrane element of the present invention is a spiral membrane element including a composite semipermeable membrane and a preservation solution in contact with the composite semipermeable membrane. The composite semipermeable membrane is a composite semipermeable membrane that allows monovalent ions to selectively permeate therethrough, and the preservation solution of the present invention is used as the preservation solution. Therefore, the configuration of the conventional membrane element can be adopted in any portion other than the use of the composite semipermeable membrane and the preservation solution as described above.

For example, as shown in Fig. 1, the spiral membrane element includes a perforated central pipe 5 and a roll R wound around the central pipe 5 and including a separation membrane 1 (composite semipermeable membrane). In the present invention, in the membrane element, the separation membrane 1 is in contact with the preservation solution, and the membrane element can be preserved (transported and stored, etc.) in this state.

A contact state between the separation membrane 1 and the preservation solution can be achieved by the above-described method as a method for bringing the preservation solution into contact with the separation membrane 1 in the state of the membrane element. For example, even when the membrane element is immersed in the preservation solution and then the preservation solution is allowed to naturally flow down from the end, the preservation solution is retained in the separation membrane 1, a supply-side flow-channel member 2 between membrane leaves L, or a permeation-side flow-channel member 3 in the membrane leaf L, and therefore a state where the separation membrane 1 is in contact with the preservation solution can be maintained.

The membrane element including the preservation solution may further include a packaging bag, a packaging container, a cap for sealing the end, and an end covering material and the like.

In the example shown in Fig. 1, the membrane element includes a plurality of membrane leaves L in each of which a permeation-side flow-channel member 3 is interposed between separation membranes 1 opposed to each other; a supply-side flow-channel member 2 interposed between any two of the membrane leaves L; a perforated central pipe 5 around which the membrane leaves L and the supply-side flow-channel members 2 are wound; and a sealing part 12 for preventing the mixing of supply-side flow-channels with permeation-side flow-channels. In this case, the permeation-side flow-channel in the membrane leaves L can be formed by the permeation-side flow-channel member 3 (also referred to as a permeation-side spacer).

It is also possible to form the supply-side flow-channel and/or the permeation-side flow-channel in the separation membrane 1 itself by providing irregularities or grooves or the like on the surface of the separation membrane 1. In this case, it is possible to omit the supply-side flow-channel member 2 and/or the permeation-side flow-channel member 3.

Fig. 1 shows an example in which the sealing part includes a both-end sealing part and an outer peripheral-side sealing part 12. In the sealing parts, the both-end sealing part is obtained by using an adhesive to seal ends of two sides of each of the membrane leaves L on both sides of the leaf in an axial direction A1. The outer circumferential-side sealing part 12 is obtained by using an adhesive to seal ends of the outer circumferential-side tip of each of the membrane leaves L. A band surrounded by the separation membranes 1 facing each other, the both-end sealing part, and the outer circumferential-side sealing part 12 serves as the permeation-side flow-channel. This communicates with an opening 5a of the central pipe 5.

It is preferred to have a central side sealing part in which the perforated central pipe 5 and the base end side of the both end sealing parts of the membrane leaf L are sealed with an adhesive. The membrane element includes the roll R in which the membrane leaf L and the supply-side flow-channel member 2 are wound around the central pipe 5 with such a central-side sealing part interposed therebetween. The adhesive is not particularly limited, and any conventionally known adhesive such as a urethane-based adhesive or an epoxy-based adhesive can be used.

A first end member 10 having a function of a seal carrier or the like may be provided on the upstream side of the roll R of the membrane element, and a second end member 20 having a function of an anti-telescoping device or the like may be provided on the downstream side.

In a typical spiral membrane element having a diameter of 8 inches, about 15 to 30 sets of membrane leaves L are wound. When the membrane element is used, the membrane element E is accommodated in a pressure vessel (vessel), and a supply liquid 7 is supplied from one end surface side of the membrane element. The supplied supply liquid 7 flows along the supply-side flow-channel members 2 into a direction parallel with the axial direction A1 of the central pipe 5, and is then discharged as a concentrated liquid 9 from the other end surface side of the membrane element. In the process in which the supply liquid 7 flows along the supply-side flow-channel members 2, a permeation liquid 8 which has permeated through the separation membranes 1 flows along the permeation-side flow-channel members 3, then flows into the central pipe 5 from the opening 5a, and is discharged from the end of the central pipe 5.

The supply-side flow-channel member 2 generally has a function of ensuring spaces, the spaces being for uniformly supplying a fluid onto a membrane plane. The supply-side flow-channel member 2 to be used may be, for example, a net, a knitted fabric, or a sheet worked to have irregularities. Such a member that has a maximum thickness of about 0.1 to 3 mm can be appropriately used if necessary. When the flow-channel member is set on each of both surfaces of the separation membrane 1, two different flow-channel members are generally used: one thereof is used, on the supply liquid side, as the supply-side flow-channel member 2, and the other is used, on the permeation liquid side, as the permeation-side flow-channel member 3. In the supply-side flow-channel member 2, a thick network flow-channel member having large meshes is used, and in the permeation-side flow-channel member 3, a woven fabric or knitted fabric channel member having fine meshes is preferably used.

When an RO membrane or an NF membrane is used for the purpose of, for example, seawater desalination or waste water treatment, each of the permeation-side flow-channel members 3 is located to be interposed between any opposed two of the separation membranes 1 in the membrane leaves L. The permeation-side flow-channel member 3 is required to support the separation membranes from the back sides of the membranes against pressure applied to the membrane, and further to ensure flow-channels for permeation liquid 8.

In order to ensure such a function, the permeation-side flow-channel member 3 is preferably formed of a tricot knitted fabric, and more preferably a tricot knitted fabric subjected to resin impregnation reinforcement or fusion treatment after the formation of the knitted fabric.

As the separation membrane 1, a composite semipermeable membrane that allows monovalent ions to selectively permeate therethrough as described above is used.

In the case of a typical spiral membrane element, an exterior member 15 is provided on the outer periphery of the roll R. The exterior member 15 is not particularly limited, and examples thereof include various sheets, films, and tapes. If necessary, a fiber reinforced resin (FRP) or the like is used for reinforcement. As a method for forming the fiber reinforced resin, a method for winding a roving in which a fiber is impregnated with a curable resin around the outer periphery of the roll R is preferable.

Examples

Hereinafter, the present invention will be described with reference to Examples, but the present invention is not limited to these Examples.

[Evaluation and measuring method]

(1) Rejection of various Ions using model sea water

Model sea water having a composition shown in Table 1 was prepared (pH depended on the result of preparation). The model sea water was used as raw water, and a commercially available membrane element used in Example 1 and the like was caused to circulate for 10 minutes or more under the conditions of a water temperature of 25°C $\pm$ 1°C, a membrane load of 15 GFD (gallons/square foot/day), and a recovery rate (permeate flow rate/raw water flow rate) of 15%. Then, a permeation liquid was sampled, and subjected to ion analysis by an ion concentration measuring device (ICS-6000 manufactured by Thermo Fisher Scientific). The rejections of various ions were calculated by the following formula.

$$\text{Rejection (\%)} = \{1-(\text{ion concentration in permeation}$$

$$\text{liquid [mg/L]})/(\text{average of ion concentrations in supply}$$

$$\text{liquid and concentrated liquid) [mg/L]}\} \times 100$$

As a result, the commercially available membrane elements used in Example 1 and the like had rejections of monovalent ions ($Na^+$, $K^+$, $Cl^-$) of 50% or less ($Na^+$ = 21%, $K^+$ = 23%, $Cl^-$ = 25% (catalogue values)) and larger rejections of divalent ions ($Mg^{2+}$, $SO_4^{2-}$) in the evaluation method described above. Therefore, the composite semipermeable membrane used was a composite semipermeable membrane that allowed monovalent ions to selectively permeate therethrough.

[Table 1]

| Component | Concentration |
|---|---|
| | mg/L |
| NaCl | 27200 |
| $CaCl_2$ | 1180 |
| KCl | 740 |
| $MgSO_4 \cdot 7H_2O$ | 6970 |
| $MgCl_2 \cdot 6H_2O$ | 5200 |
| $NaHCO_3$ | 200 |

(2) Rejection of $MgSO_4$

The rejections (salt rejections) of the membrane element before and after storage were determined as follows.

Using the membrane element before and after storage, an aqueous magnesium sulfate ($MgSO_4$) solution (concentration: 2000 ppm, temperature: 25°C ± 1°C, pH: 6.5 to 7.0) was caused to circulate and permeate for 10 minutes or more at an operation pressure of 0.76 MPa and a recovery rate (permeate flow rate/raw water flow rate) of 15%. The electric conductivities of the membrane permeation liquid and the supply liquid were measured using an electric conductivity measuring apparatus (CM-41X manufactured by DKK-TOA YAMAGATA CORPORATION), and from the results and a calibration curve (concentration-electric conductivity), the rejection of $MgSO_4$ was calculated based on the following formula.

$$\text{Rejection} = (1-(MgSO_4 \text{ concentration in membrane permeation liquid}/(\text{average of } MgSO_4 \text{ concentrations in supply liquid and concentrated liquid})) \times 100 \ (\%)$$

(3) Permeated water flow rate and permeated water flow rate ratio

The flow rate (GPD (gallon/day)) of the membrane permeation liquid after circulating for 10 minutes or more, when the above "(2) Rejection of $MgSO_4$" was measured, was measured. The permeated water flow rate ratio of the membrane element before and after storage was calculated based on the following formula.

$$\text{Permeated water flow rate ratio } (-) = \text{permeated water flow rate after storage (GPD)/permeated water flow rate before storage (GPD)}$$

The target value of the permeated water flow rate ratio (-) is 0.95 or more.

Example 1

A commercially available spiral membrane element (PRO-XS2 manufactured by Nitto Denko Corporation) was used, which included a composite semipermeable membrane (NF membrane) that allowed monovalent ions to selectively permeate therethrough. The membrane element was immersed in an aqueous solution (preservation solution) containing 3.5% by mass of NaCl for 60 seconds. Thereafter, the membrane element was taken out, and an extra preservation solution was dropped from the membrane element in a state where the membrane element was erected. Thereafter, the membrane element was bagged, and the bag was sucked for vacuum packing. This was stored in an oven at a temperature of 50°C for 27 days, and the rejection of $MgSO_4$, the permeated water flow rate, and the permeated water flow rate ratio before and after storage were evaluated. The results are shown in Table 2.

Examples 2 to 14

Membrane elements were stored in the same manner as in Example 1 except that the membrane elements were stored in preservation solutions shown in Table 2 at storage temperatures for storage days as shown in Table 2 in Example 1, and the rejection of $MgSO_4$, the permeated water flow rate, and the permeated water flow rate ratio before and after storage were evaluated. The results are shown in Table 2.

Example 15

A membrane element was stored in the same manner as in Example 1 except that a commercially available spiral membrane element (PRO-XS1 manufactured by Nitto Denko Corporation) was used as the membrane element in Example 1, and the rejection of $MgSO_4$, the permeated water flow rate, and the permeated water flow rate ratio before and after storage were evaluated. The results are shown in Table 2. The composite semipermeable membrane used was a composite semipermeable membrane that allows monovalent ions to selectively permeate therethrough, based on the evaluation results of the rejections of various ions using model seawater.

Comparative Example 1

A membrane element was stored in the same manner as in Example 1 except that the membrane element was stored in an aqueous solution containing propylene glycol as a main raw material (2% by mass) (Safeguard 100 manufactured by Kurita Water Industries Ltd.) as a preservation solution at storage temperatures for storage days as shown in Table 2 in Example 1, and the rejection of $MgSO_4$, the permeated water flow rate, and the permeated water flow rate ratio before and after storage were evaluated. The results are shown in Table 2.

Comparative Examples 2 to 4

Membrane elements were stored in the same manner as in Example 1 except that the membrane elements were stored in preservation solutions containing divalent ions as shown in Table 2 at storage temperatures for storage days as shown in Table 2 in Example 1, and the rejection of $MgSO_4$, the permeated water flow rate, and the permeated water flow rate ratio before and after storage were evaluated. The results are shown in Table 2.

[Table 2]

| | Component | Molecular weight | Concentration | Storage temperature | Storage day | Initial MgSO4 rejection | Initial permeated water flow rate | Rejection after storage | Permeated water flow rate after storage | Permeated water flow rate ratio (after/ before) |
|---|---|---|---|---|---|---|---|---|---|---|
| | | | % by mass | °C | Day | % | GPD | % | GPD | - |
| Comparative Example 1 | Safeguard | 76 | 2.0% | 50 | 32 | 99.88 | 10089 | 99.81 | 9474 | 0.94 |
| Comparative Example 2 | MgC12 | 94 | 3.5% | 50 | 27 | 99.89 | 11273 | 99.89 | 8833 | 0.78 |
| Comparative Example 3 | CaC12 | 110 | 3.5% | 50 | 27 | 99.84 | 10377 | 99.84 | 9303 | 0.90 |
| Comparative Example 4 | Na2SO4 | 120 | 3.5% | 50 | 32 | 99.95 | 10548 | 99.83 | 7389 | 0.70 |
| Example 1 | NaCl | 58 | 3.5% | 50 | 27 | 99.89 | 10222 | 99.90 | 10643 | 1.04 |
| Example 2 | NaCl | 58 | 3.5% | 60 | 27 | 99.90 | 10643 | 99.88 | 10894 | 1.02 |
| Example 3 | NH4C1 | 53 | 3.5% | 50 | 39 | 99.88 | 9217 | 99.85 | 10177 | 1.10 |
| Example 4 | NaHCO3 | 63 | 3.5% | 50 | 32 | 99.93 | 10296 | 99.70 | 14702 | 1.43 |
| Example 5 | KC1 | 74 | 3.5% | 50 | 27 | 99.83 | 10133 | 99.85 | 9793 | 0.97 |
| Example 6 | NaNO3 | 85 | 3.5% | 50 | 27 | 99.83 | 10058 | 99.81 | 10886 | 1.08 |
| Example 7 | NH4NO3 | 80 | 3.5% | 50 | 27 | 99.94 | 11637 | 99.88 | 13107 | 1.13 |
| Example 8 | CH3COONa | 82 | 3.5% | 50 | 27 | 99.90 | 12288 | 99.80 | 14373 | 1.17 |
| Example 9 | HCOONa | 68 | 3.5% | 50 | 27 | 99.86 | 10369 | 99.82 | 12362.4 | 1.19 |
| Example 10 | NaCl | 58 | 2.5% | 50 | 35 | 99.92 | 9724 | 99.85 | 10349 | 1.06 |
| Example 11 | NaCl | 58 | 2.0% | 50 | 35 | 99.91 | 12672 | 99.86 | 14072 | 1.11 |
| Example 12 | NaCl | 58 | 1.5% | 50 | 35 | 99.89 | 10083 | 99.83 | 10722 | 1.06 |
| Example 13 | NaCl | 58 | 1.0% | 50 | 39 | 99.89 | 11348 | 99.92 | 11373 | 1.00 |
| Example 14 | NaCl | 58 | 0.5% | 50 | 39 | 99.83 | 10722 | 99.93 | 10452 | 0.97 |
| Example 15 | NaCl | 58 | 3.5% | 50 | 27 | 99.84 | 9139 | 99.81 | 9486 | 1.04 |

As shown in the results of Table 2, in Examples 1 to 15 in which the aqueous solution containing an inorganic salt and/or an organic salt composed only of monovalent cations and monovalent anions was used as the preservation solution, the decrease in the water permeability of the composite semipermeable membrane was less likely to occur even under a high-temperature environment.

Meanwhile, in Comparative Examples 2 to 4 in which the aqueous solution containing divalent ions was used as the preservation solution, the decrease in the water permeability of the composite semipermeable membrane occurred under a high-temperature environment. In Comparative Example 1 using the preservation solution containing propylene glycol as a main raw material, the amount of a decrease in the water permeability of the composite semipermeable membrane was slightly suppressed under a high-temperature environment, but an effect of suppressing the decrease in the water permeability was not sufficient.

INDUSTRIAL APPLICABILITY

A method for preserving a composite semipermeable membrane, a preservation solution thereof, and a spiral membrane element including the preservation solution thereof of the present invention are less likely cause the water permeability of the composite semipermeable membrane to decrease even in a high-temperature environment, eliminate the need for transporting and storing the membrane element in a refrigerated (reefer) container, and are industrially advantageous in terms of cost of transportation and storage, and an environmental load.

**Claims**

1. A method for preserving a composite semipermeable membrane that allows monovalent ions to selectively permeate therethrough,
   the method comprising using an aqueous solution containing an inorganic salt and/or an organic salt composed only of monovalent cations and monovalent anions as a preservation solution to be brought into contact with the composite semipermeable membrane.

2. The method for preserving a composite semipermeable membrane according to claim 1, wherein

   the composite semipermeable membrane includes a porous support and a separation functional layer formed of a polyamide-based resin on the porous support, and
   the polyamide-based resin contains a component derived from piperazine.

3. The method for preserving a composite semipermeable membrane according to claim 1 or 2, wherein

   the monovalent cations are one or more cations selected from the group consisting of $NH_4^+$, $Na^+$, and $K^+$, the monovalent anions are one or more anions selected from the group consisting of $Cl^-$, $HCOO^-$, $CH_3COO^-$, $HCO_3^-$, and $NO_3^-$, and
   a molecular weight of the inorganic salt and/or the organic salt is 101 or less.

4. The method for preserving a composite semipermeable membrane according to any one of claims 1 to 3, wherein a concentration of the inorganic salt and/or the organic salt is 0.5% by mass or more in the preservation solution.

5. The method for preserving a composite semipermeable membrane according to any one of claims 1 to 4, wherein the preservation solution further contains a chemical having a bacteriostatic effect or a bactericidal effect.

6. Use of a preservation solution consisting of an aqueous solution containing an inorganic salt and/or an organic salt composed only of monovalent cations and monovalent anions for preserving a composite semipermeable membrane that allows monovalent ions to selectively permeate therethrough.

7. The use according to claim 6, wherein

   the composite semipermeable membrane includes a porous support and a separation functional layer formed of a polyamide-based resin on the porous support, and
   the polyamide-based resin contains a component derived from piperazine.

8. The use according to claim 6 or 7, wherein

the monovalent cations are one or more cations selected from the group consisting of $NH_4^+$, $Na^+$, and $K^+$, the monovalent anions are one or more anions selected from the group consisting of $Cl^-$, $HCOO^-$, $CH_3COO^-$, $HCO_3^-$, and $NO_3^-$, and

a molecular weight of the inorganic salt and/or the organic salt is 101 or less.

9. The use according to any one of claims 6 to 8, wherein a concentration of the inorganic salt and/or the organic salt is 0.5% by mass or more in the preservation solution.

10. The use according to any one of claims 6 to 9, wherein the preservation solution further contains a chemical having a bacteriostatic effect or a bactericidal effect.

11. A spiral membrane element comprising a composite semipermeable membrane and a preservation solution in contact with the composite semipermeable membrane,

wherein the composite semipermeable membrane is a composite semipermeable membrane that allows monovalent ions to selectively permeate therethrough, and
the preservation solution is an aqueous solution containing an inorganic salt and/or an organic salt composed only of monovalent cations and monovalent anions.

12. The spiral membrane element according to claim 11, wherein

the composite semipermeable membrane includes a porous support and a separation functional layer formed of a polyamide-based resin on the porous support, and
the polyamide-based resin contains a component derived from piperazine.

13. The spiral membrane element according to claim 11 or 12, wherein

the monovalent cations are one or more cations selected from the group consisting of $NH_4^+$, $Na^+$, and $K^+$, the monovalent anions are one or more anions selected from the group consisting of $Cl^-$, $HCOO^-$, $CH_3COO^-$, $HCO_3^-$, and $NO_3^-$, and

a molecular weight of the inorganic salt and/or the organic salt is 101 or less.

14. The spiral membrane element according to any one of claims 11 to 13, wherein a concentration of the inorganic salt and/or the organic salt is 0.5% by mass or more in the preservation solution.

15. The spiral membrane element according to any one of claims 11 to 14, wherein the preservation solution further contains a chemical having a bacteriostatic effect or a bactericidal effect.

Fig. 1

Europäisches
Patentamt

European
Patent Office

Office européen
des brevets

# EUROPEAN SEARCH REPORT

**Application Number**

**EP 23 21 2153**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/257818 A1 (KONISHI TAKAHISA [JP] ET AL) 23 October 2008 (2008-10-23) * paragraphs [0031], [0087] – [0088], [0130]; claims; examples 33, 52 * ----- | 1-15 | INV. B01D67/00 |
| X | US 2003/098272 A1 (MARSH ALLYN R [US] ET AL) 29 May 2003 (2003-05-29) * paragraphs [0011], [0014] – [0015], [0030], [0044]; examples 1,7 * ----- | 1-15 | |
| X | JP H06 277470 A (ASAHI CHEMICAL IND) 4 October 1994 (1994-10-04) * paragraphs [0004], [0006] – [0007], [0017]; claim 2; examples 4-5 * ----- | 1,3-6, 8-15 | |
| X | JP 2020 142191 A (ASAHI KASEI CORP) 10 September 2020 (2020-09-10) * paragraphs [0011], [0039]; claims * ----- | 1,3-6, 8-10 | |

| | TECHNICAL FIELDS SEARCHED (IPC) |
|---|---|
| | B01D |

The present search report has been drawn up for all claims

| Place of search | Date of completion of the search | Examiner |
|---|---|---|
| Munich | 9 April 2024 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2153

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | | Publication date | Patent family member(s) | | Publication date |
|---|---|---|---|---|---|
| US 2008257818 | A1 | 23-10-2008 | CN | 101027116 A | 29-08-2007 |
| | | | EP | 1820566 A1 | 22-08-2007 |
| | | | JP | 4656502 B2 | 23-03-2011 |
| | | | JP | 2006122886 A | 18-05-2006 |
| | | | KR | 20070057267 A | 04-06-2007 |
| | | | KR | 20090007499 A | 16-01-2009 |
| | | | US | 2008257818 A1 | 23-10-2008 |
| | | | WO | 2006038426 A1 | 13-04-2006 |
| US 2003098272 | A1 | 29-05-2003 | BR | 0213614 A | 14-09-2004 |
| | | | GB | 2395674 A | 02-06-2004 |
| | | | JP | 4032025 B2 | 16-01-2008 |
| | | | JP | 2005508275 A | 31-03-2005 |
| | | | US | 2003098272 A1 | 29-05-2003 |
| | | | WO | 03039721 A1 | 15-05-2003 |
| JP H06277470 | A | 04-10-1994 | JP | 3241855 B2 | 25-12-2001 |
| | | | JP | H06277470 A | 04-10-1994 |
| JP 2020142191 | A | 10-09-2020 | JP | 7237656 B2 | 13-03-2023 |
| | | | JP | 2020142191 A | 10-09-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020142191 A
- JP 58024303 A
- JP 1180208 A
- JP 8224452 A
- JP 2011189340 A